# EUROPEAN PATENT APPLICATION

(11) **EP 4 715 224 A1**
(43) Date of publication of application: **25.03.2026**
(21) Application number: 25201091.3
(22) Date of filing: 09.09.2025
(51) Int. Cl.: F16B 5/02, F16B 25/00, F16B 37/00, F16B 7/18, F16B 35/06

(54) **ELONGATED FASTENER FOR A GLUED-IN-ROD STRUCTURE**

(30) Priority: 23.09.2024 FI 20246147
(71) Applicant: Peikko Group Oy, 15170 Lahti (FI)
(72) Inventor: Berzins, Andris, LV-1005 Riga (LV)
(74) Representative: Boco IP Oy Ab

(57) **Abstract**

Presented is an elongated fastener (1) for a glued-in-rod structure. The elongated fastener (1) comprises a rod (2) having a first proximal end (3) and a first distal end (4), a first outer thread (5), and a longitudinal central axis X-X. The elongated fastener (1) comprises a screw member (6) having a second proximal end (7) that is attached to the first distal end (4) of the rod (2), and the screw member (6) having an external wood thread (8) extending from a second distal end (9) of the screw member (6) towards the second proximal end (7) of the screw member (6) and a longitudinal central axis Y-Y that is coaxial with the longitudinal central axis X-X of the rod (2). Presented is also a fastening method and arrangement as well as an installing method and arrangement.

## Description

### Field of the invention

The invention relates to an elongated fastener for a glued-in-rod structure as defined in the preamble of independent claim 1.

The invention also relates to a fastening method for fastening a second construction part to a first construction part of wood as defined in claim 16.

The invention also relates to a fastening arrangement for fastening a second construction part to a first construction part of wood as defined in claim 17.

The invention also relates to an installing method for installing an elongated fastener in a first construction part of wood as defined in claim 18.

The invention also relates to an installing arrangement for installing an elongated fastener in a first construction part of wood as defined in claim 19.

### Objective of the invention

The object of the invention is to provide an elongated fastener for a glued-in-rod structure that is easy to install and use.

### Short description of the invention

The elongated fastener for a glued-in-rod structure is characterized by the definitions of independent claim 1.

Preferred embodiments of the elongated fastener are defined in the dependent claims 2 to 15.

The fastening method for fastening a second construction part to a first construction part of wood is correspondingly characterized by the definitions of claim 16.

The fastening arrangement for fastening a second construction part to a first construction part of wood is correspondingly characterized by the definitions of claim 17.

The installing method for installing an elongated fastener in a first construction part of wood is correspondingly characterized by the definitions of claim 18.

The installing arrangement for installing an elongated fastener in a first construction part of wood is correspondingly characterized by the definitions of claim 19.

### List of figures

In the following the invention will described in more detail by referring to the figures, of which
Figure 1 shows a first embodiment of the elongated fastener for a glued-in-rod structure,
Figure 2 shows the elongated fastener shown in figure 1 in side view and with the rod illustrated shortened,
Figure 3 is a detail view of the elongated fastener shown in figure 1,
Figure 4 shows the second tubular sleeve member of the elongated fastener shown in figure 1, which is a first embodiment of the second tubular sleeve member,
Figure 5 shows the second tubular sleeve member shown in figure 4 from another angle,
Figure 6 shows the second tubular sleeve member shown in figure 4 from another angle,
Figure 7 shows the second tubular sleeve member shown in figure 4 in section view,
Figure 8 shows a second embodiment of the second tubular sleeve member,
Figure 9 shows the second tubular sleeve member shown in figure 8 from another angle,
Figure 10 shows the second tubular sleeve member shown in figure 8 in section view,

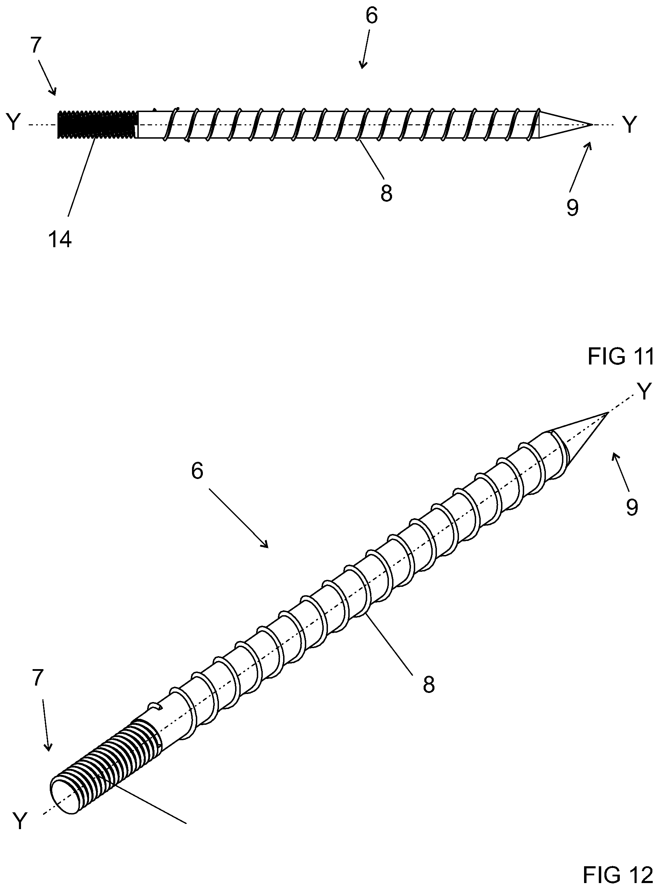

Figure 11 shows a screw member of the elongated fastener shown in figure 1, which is a first embodiment of the screw member,
Figure 12 shows the screw member shown in figure 11 from another angle,
Figure 13 shows a second embodiment of the elongated fastener,
Figure 14 shows a third embodiment of the elongated fastener,
Figure 15 shows a fourth embodiment of the elongated fastener,
Figure 16 shows the elongated fastener shown in figure 15 in side view and with the rod illustrated shortened,

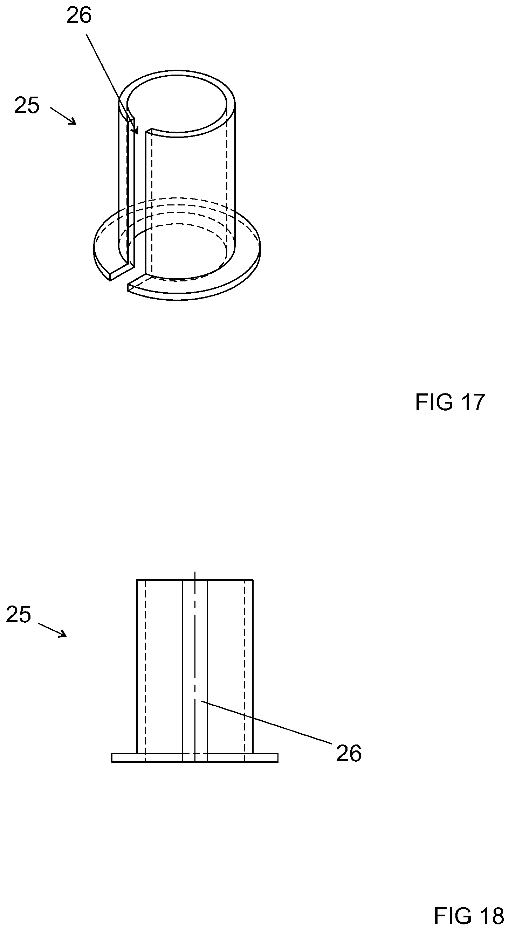

Figure 17 shows in transparent view the first tubular sleeve member of the elongated fastener shown in figure 15,
Figure 18 shows the first tubular sleeve member shown in figure 17 in cut view,

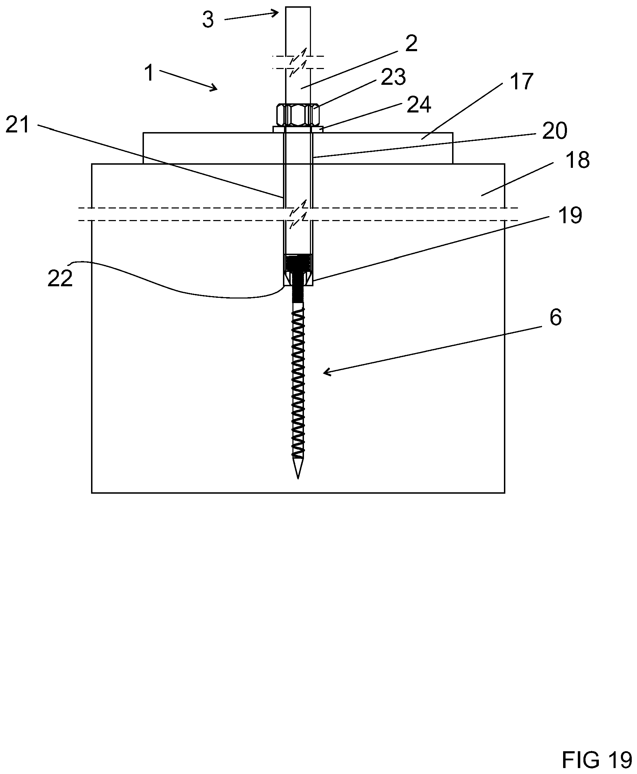

Figure 19 shows an embodiment of the fastening arrangement in partly cut view,

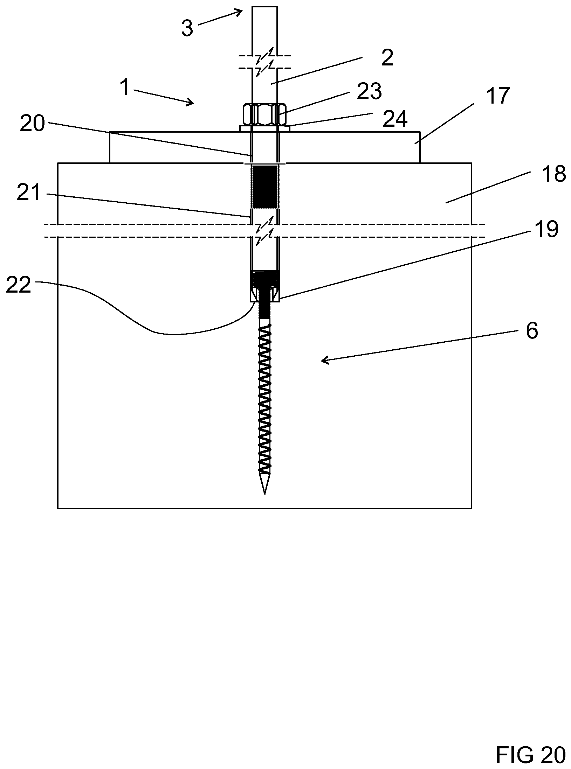

Figure 20 shows another embodiment of the fastening arrangement in partly cut view, and

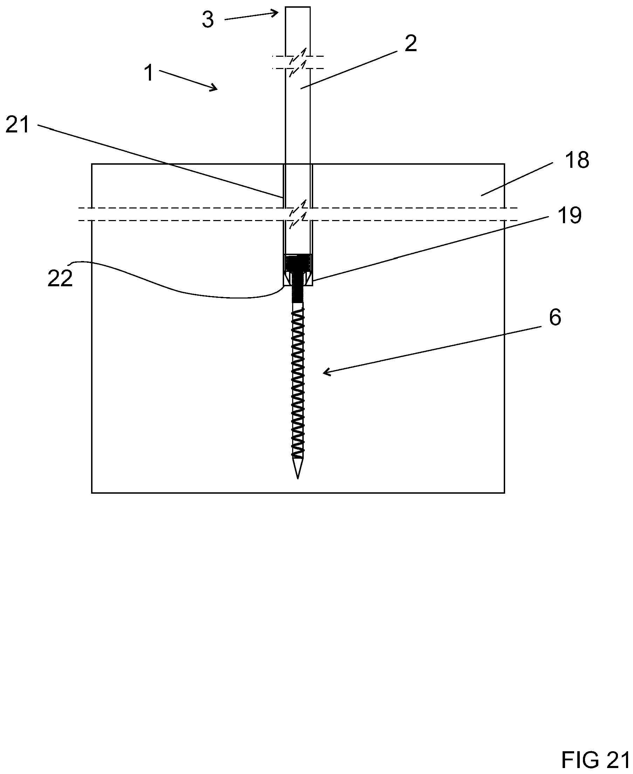

Figure 21 shows an embodiment of the installing arrangement in cut view.

### Detailed description of the invention

First the elongated fastener 1 for a glued-in-rod structure and some variants and embodiment of the elongated fastener 1 will be presented in greater detail.

The elongated fastener 1 comprises a rod 2 having a first proximal end 3 and a first distal end 4, a first outer thread 5, and a longitudinal central axis X-X.

The elongated fastener 1 comprises a screw member 6 having a second proximal end 7 that is attached to the first distal end 4 of the rod 2.

The screw member 6 having an external wood thread 8 extending from a second distal end 9 of the screw member 6 towards the second proximal end 7 of the screw member 6 and a longitudinal central axis Y-Y that is coaxial with the longitudinal central axis X-X of the rod 2.

The screw member 6 is preferably, but not necessarily, a separate part, which is attached to the rod 2.

The screw member 6 is preferably, but not necessarily, made of metal such as of steel.

The rod 2 is preferably, but not necessarily, made of metal such as of steel.

The elongated fastener 1 can have a first tubular sleeve member 25 coaxially surrounding the rod 2 between the first proximal end 3 of the rod 2 and the first distal end 4 of the rod 2. A purpose of the first tubular sleeve member 25 is to center the elongated fastener 1 in a first blind hole 19 in a part of wood such as in a first construction part 18 of wood. The first tubular sleeve member 25 is preferably, but not necessarily, free of threads.

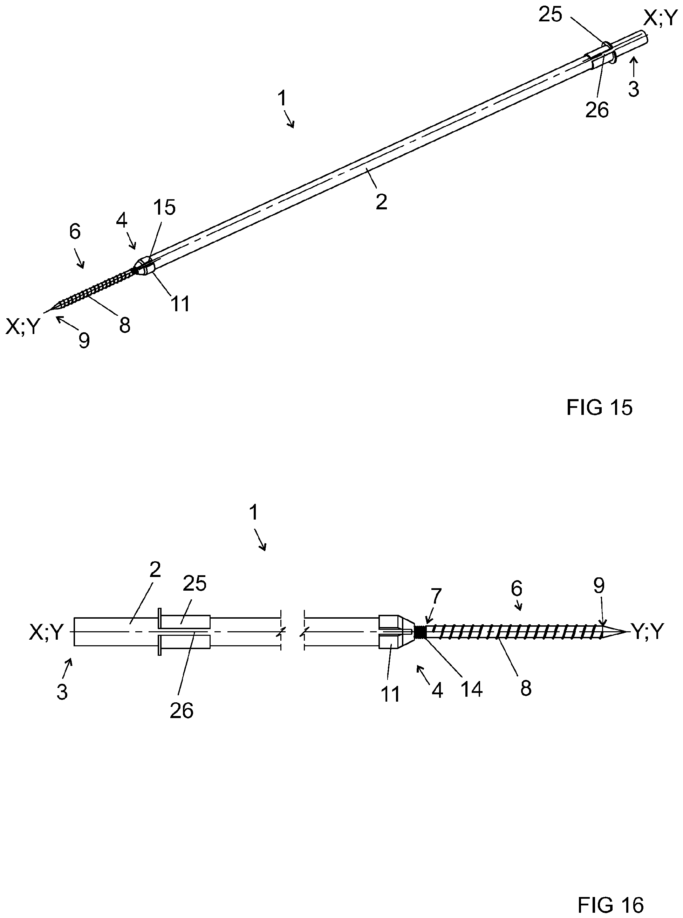

The first tubular sleeve member 25 can for example be made of metal or polymer. The first tubular sleeve member 25 has preferably, but not necessarily, at least one first channel 26 configured to form a passage for hardenable adhesive material 21 such as for glue. By this is for example meant that the first channel 26 allows hardenable adhesive material 21 such as glue to flow past the first tubular sleeve member 25 in the first channel 26 when the elongated fastener is arranged in a first blind hole 19 in a part of wood such as in a first construction part 18 of wood as illustrated in figure 15. The hardenable adhesive material 21 can for example be 2-component polyurethane or epoxy. The first channel 26 can for example be 1 to 5 mm wide.

The elongated fastener 1 have a second tubular sleeve member 11 coaxially surrounding the first distal end 4 of the rod 2. A purpose of the second tubular sleeve member 11 is to center the elongated fastener 1 in a first blind hole 19 in a part of wood such as in a first construction part 18 of wood.

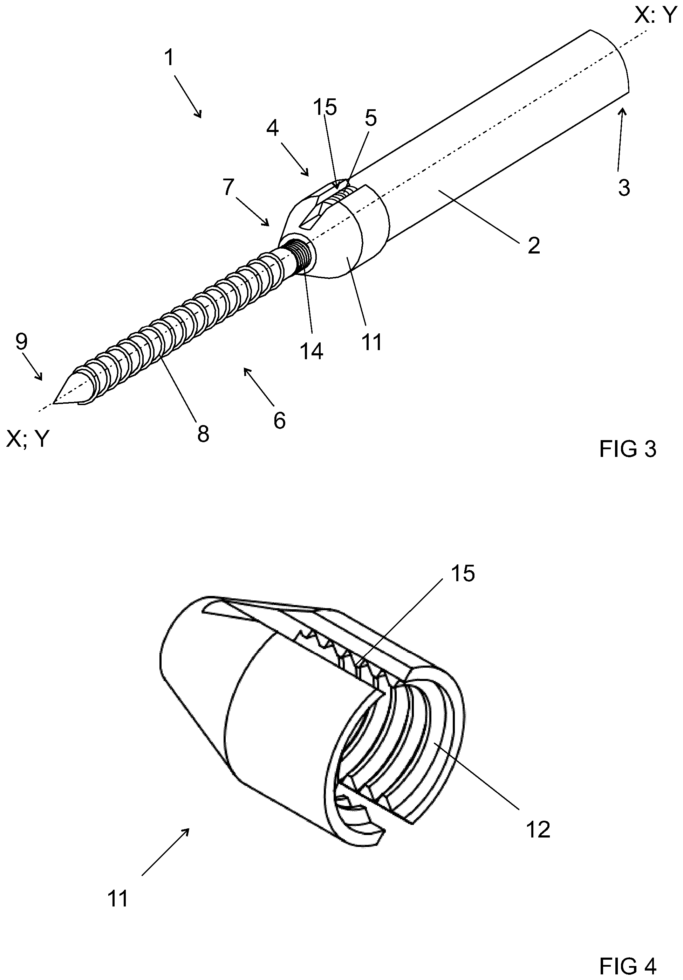

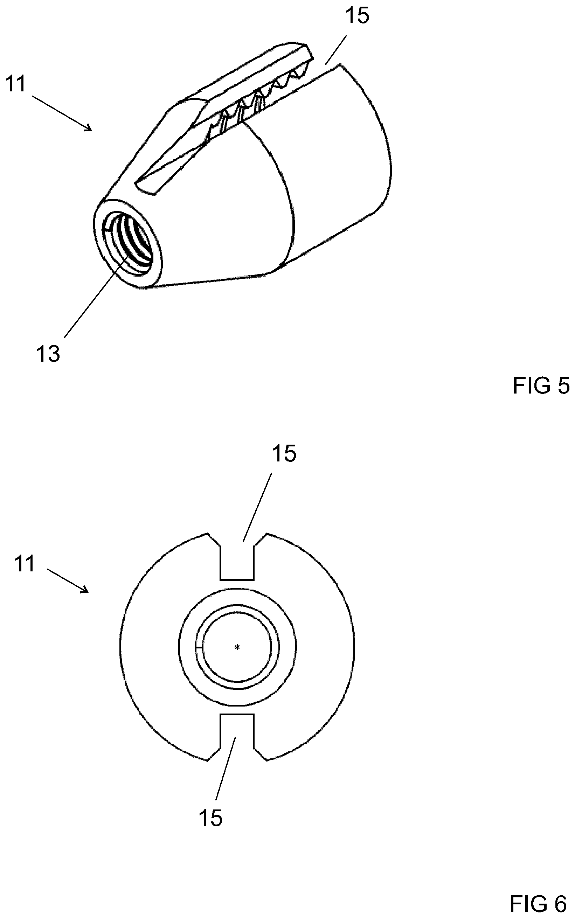

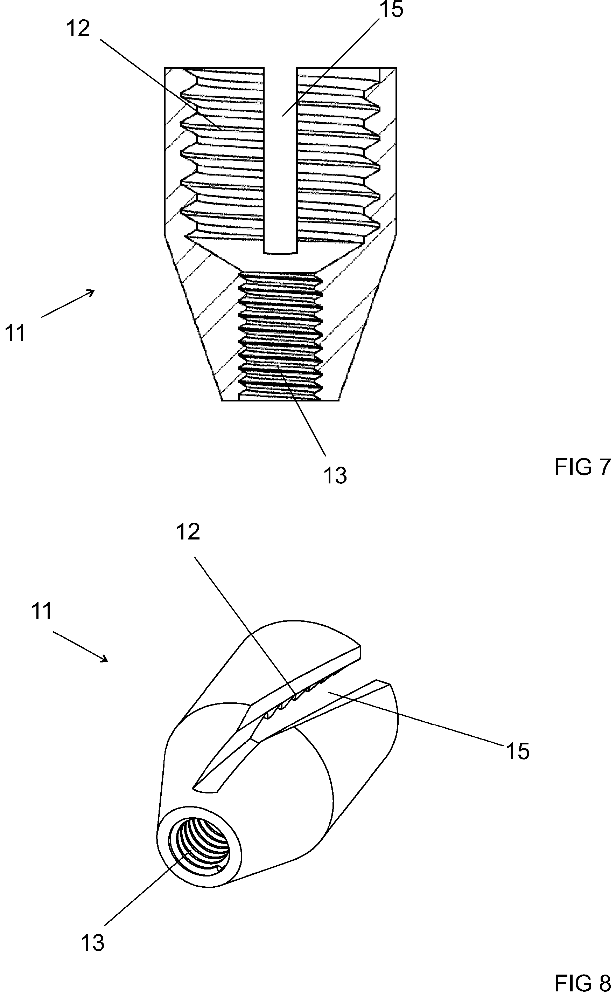

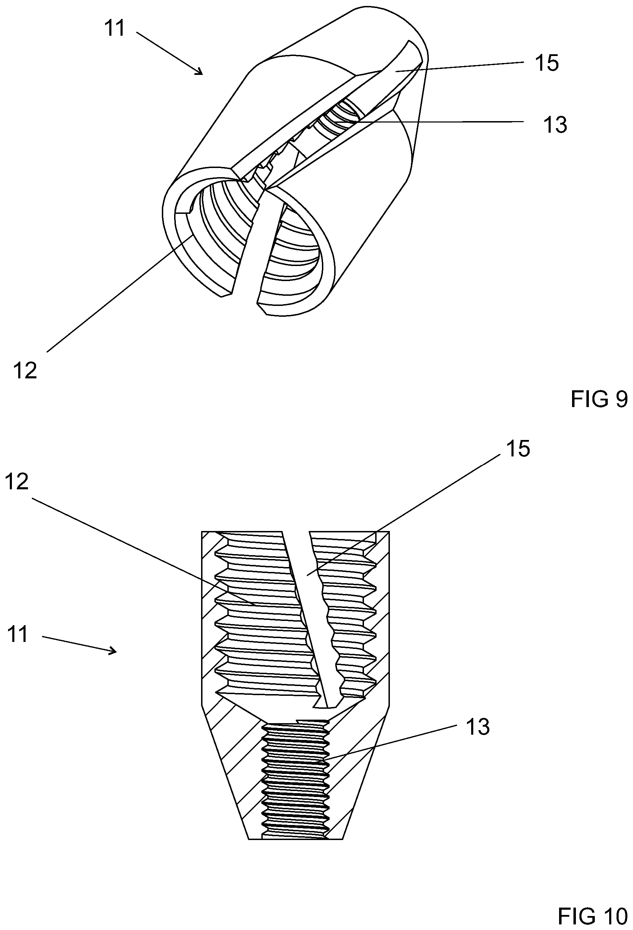

The second tubular sleeve member 11 can for example be made of metal or polymer. The second tubular sleeve member 11 has preferably, but not necessarily, at least one second channel 15 configured to form a passage for hardenable adhesive material 21 such as for glue. By this is for example meant that the second channel allows hardenable adhesive material 21 such as glue to flow past the second tubular sleeve member 11 in the second channel 15 when the elongated fastener is arranged in a first blind hole 19 in a part of wood such as in a first construction part 18 of wood. In the second tubular sleeve member 11 illustrated figures 4 to 7, the second channel 15 is straight and in the second tubular sleeve member 11 illustrated figures 8 to 10, the second channel 15 is curved.

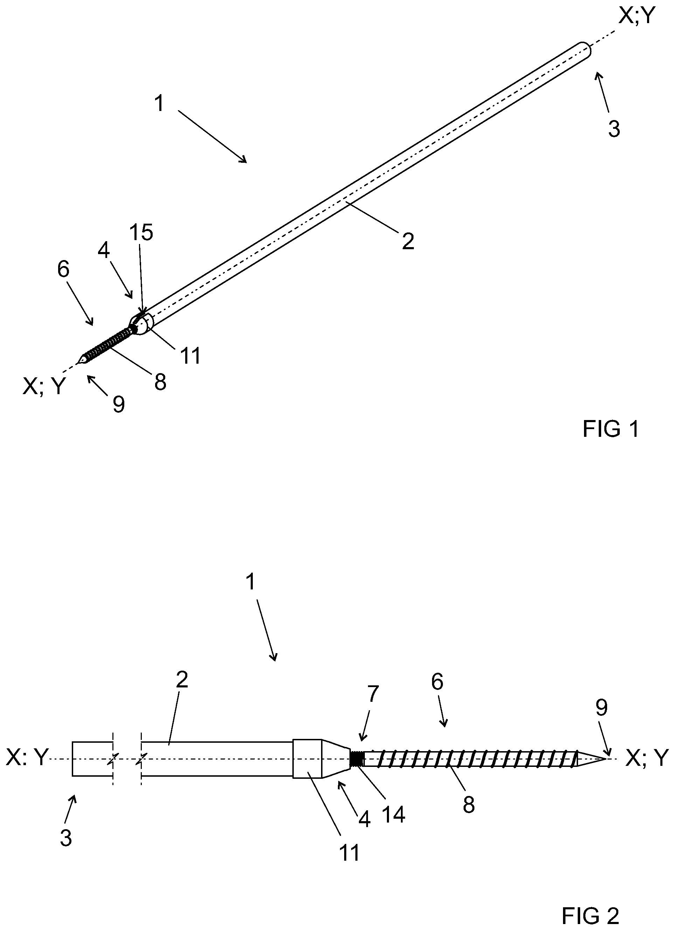

In the first embodiment of the elongated fastener 1 illustrated in figures 1 to 3, the second tubular sleeve member 11 coaxially surrounding additionally the second proximal end 7 of the screw member 6.

The screw member 6 is attached to the rod 2 by means of the second tubular sleeve member 11.

In the first embodiment of the elongated fastener 1 illustrated in figures 1 to 3, the first outer thread 5 of the rod 2 extend from the first distal end 4 of the rod 2, the second tubular sleeve member 11 has a first inner thread 12 configured to engage the first outer thread 5 extending from the first distal end 4 of the rod 2, and the second tubular sleeve member 11 has a second inner thread 13 configured to engage a second outer thread 14 extending from the second proximal end 7 of the screw member 6.

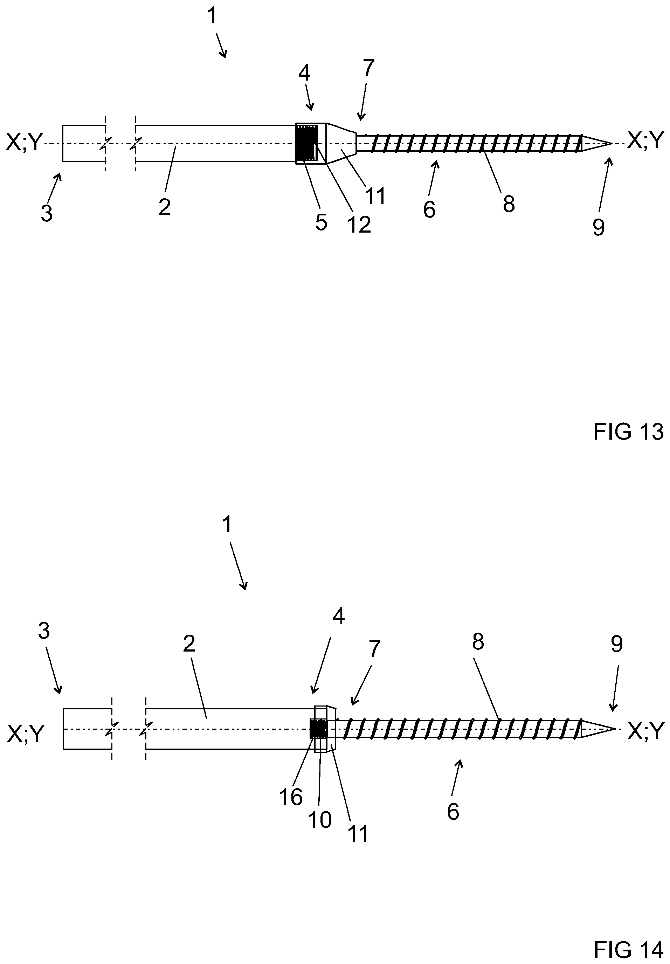

In the second embodiment of the elongated fastener 1 illustrated in figure 13, the first outer thread 5 of the rod 2 extend from the first distal end 4 of the rod 2, the second tubular sleeve member 11 has a first inner thread 12 configured to engage the first outer thread 5 of the rod 2, and the second proximal end 7 of the screw member 5 is attached to the second tubular sleeve member 11 so that the screw member 6 and the second tubular sleeve member 11 form a monolithic structure.

In the third embodiment of the elongated fastener 1 illustrated in figure 14, the elongated fastener 1 having a second blind hole 16 extending from the first distal end 4 of the rod 2 towards the first proximal end 3 of the rod 2, and the second blind hole 16 having a third inner thread 10 configured to engage a second outer thread 14 extending from the second proximal end 7 of the screw member 6.

The first outer thread 5 of the rod 2 extend preferably, but not necessarily, from one of the first proximal end 3 of the rod 2 and the first distal end 4 of the rod 2.

The first outer thread 5 of the rod 2 extend preferably, but not necessarily, to one of the first proximal end 3 of the rod 2 and the first distal end 4 of the rod 2.

The first outer thread 5 of the rod 2 extend preferably, but not necessarily, from the first proximal end 3 of the rod 2 to the first distal end 4 of the rod 2.

The first outer thread 5 is preferably, but not necessarily, a machine thread.

The major diameter d1 of the screw member 6 is preferably, but not necessarily, less than 50 % of the diameter of the rod 2, preferably less than 50 % of major diameter d2 of the first outer thread 5 of the rod 2.

The rod 2 has preferably, but not necessarily, a cylindrical outer surface (not marked with a reference numeral), and by the cylindrical outer surface has preferably, but not necessarily, elevations and/or depressions (not illustrated). The rod 2 can for example be made of a reinforcement bar having a ribbed surface so that the elevations and/or depressions are at least partly formed by the ribbed surface. The elevations and/or depressions are preferably, but not necessarily, at least partly formed by the first outer thread 5 of the rod 2.

Next the fastening method for fastening a second construction part 17 to a first construction part 18 of wood and some variants and embodiments of the fastening method will be presented in greater detail.

The fastening method comprises a first providing step for providing the second construction part 17 with a hole 20.

The second construction part 17 is preferably, but not necessarily, made of metal.

The fastening method comprises a drilling step for drilling a first blind hole 19 in the first construction part 18 of wood.

The fastening method comprises an aligning step for aligning the hole 20 in the second construction part 17 and the first blind hole 19 in the first construction part 18 of wood.

The fastening method comprises a second providing step for providing hardenable adhesive material 21 such as glue in the first blind hole 19 in the first construction part 18 of wood. The hardenable adhesive material 21 can for example be 2-component polyurethane or epoxy.

The fastening method comprises a third providing step for providing an elongated fastener 1 according to any embodiment presented herein.

The fastening method comprises an arranging step for arranging the rod 2 of the elongated fastener 1 to pass through the hole 20 in the second construction part 17 and into the first blind hole 19 in the first construction part 18 of wood so that the rod 2 of the elongated fastener 1 is at least partly in the first blind hole 19 in the first construction part 18 of wood, so that the first proximal end 3 of the rod 2 of the elongated fastener 1 is outside the first blind hole 19 in the first construction part 18 of wood and outside the hole 20 in the second construction part 17, and so that the screw member 6 of the elongated fastener 1 is screwed through a bottom 22 of the first blind hole 19 in the first construction part 18 of wood and into the first construction part 18 of wood.

The fastening method comprises preferably, but not necessarily, threading a nut 23 at the first outer thread 5 of the rod 2 of the elongated fastener 1 outside the first blind hole 19 in the first construction part 18 of wood and outside the hole 20 in the second construction part 17 so that the nut 23 presses the second construction part 17 against the first construction part 18 of wood. In such case, the fastening method comprises preferably, but not necessarily, providing a washer 24 at the rod 2 of the elongated fastener 1 between the nut 23 and the second construction part 17.

The fastening method comprises preferably, but not necessarily, providing an acorn nut (not illustrated) at the first outer thread 5 of the rod 2 of the elongated fastener 1 in connection with the arranging step, and by engaging the acorn nut in the arranging step with an external tool (not illustrated in the figures) and by rotating the elongated fastener 1 about the longitudinal central axis in the arranging step with the external tool.

Next the fastening arrangement for fastening a second construction part 17 to a first construction part 18 of wood and some variants and embodiments of the fastening arrangement will be presented in greater detail.

In the fastening arrangement the second construction part 17 is provided with a hole 20.

The second construction part 17 is preferably, but not necessarily, made of metal.

In the fastening arrangement a first blind hole 19 is provided in the first construction part 18 of wood.

In the fastening arrangement the hole 20 in the second construction part 17 and the first blind hole 19 in the first construction part 18 of wood are aligned.

In the fastening arrangement hardenable adhesive material 21 such as glue is provided in the blind hole 19 in the first construction part 18 of wood. The hardenable adhesive material 21 can for example be 2-component polyurethane or epoxy.

In the fastening arrangement an elongated fastener 1 according to any embodiment presented herein is arranged to pass through the hole 20 in the second construction part 17 and into the first blind hole 19 in the first construction part 18 of wood so that the rod 2 of the elongated fastener 1 is at least partly in the first blind hole 19 in the first construction part 18 of wood, so that the first proximal end 3 of the rod 2 of the elongated fastener 1 is outside the first blind hole 19 in the first construction part 18 of wood and outside the hole 20 in the second construction part 17, and so that the screw member 6 of the elongated fastener 1 is screwed through a bottom 22 of the first blind hole 19 in the first construction part 18 of wood and into the first construction part of wood 18.

In the fastening arrangement a nut 23 is preferably, but not necessarily, threaded at the first thread 5 of the rod 2 of the elongated fastener 1 outside the first blind hole 19 in the first construction part 18 of wood and outside the hole 20 in the second construction part 17 so that the nut 23 presses the second construction part 17 against the first construction part of wood. In such case, a washer 24 is preferably, but not necessarily, provided at the rod 2 between the nut 23 and the second construction part 17.

Next the installing method for installing an elongated fastener in a first construction part 18 of wood will be presented in greater detail.

The installing method comprises a drilling step for drilling a blind hole 19 in the first construction part 18 of wood.

The installing method comprises a second providing step for providing hardenable adhesive material 21 in the blind hole 19 in the first construction part 18 of wood. The hardenable adhesive material 21 can for example be 2-component polyurethane or epoxy.

The installing method comprises a third providing step for providing the elongated fastener in the form of an elongated fastener 1 according to any embodiment presented herein.

The installing method comprises an arranging step for arranging the rod 2 of the elongated fastener 1 into the first blind hole 19 in the first construction part 18 of wood so that the rod 2 of the elongated fastener 1 is partly in the first blind hole 19 in the first construction part 18 of wood, so that the first proximal end 3 of the rod 2 of the elongated fastener 1 is outside the first blind hole 19 in the first construction part 18 of wood, and so that the screw member 6 of the elongated fastener 1 is screwed through a bottom 22 of the first blind hole 19 in the first construction part 18 of wood and into the first construction part 18 of wood.

Next the installing arrangement for installing an elongated fastener in a first construction part 18 of wood will be presented in greater detail.

The installing arrangement comprises a blind hole 19 in the first construction part 18 of wood.

In the installing arrangement, hardenable adhesive material 21 is provided in the blind hole 19 in the first construction part 18 of wood. The hardenable adhesive material 21 can for example be 2-component polyurethane or epoxy.

In the installing arrangement, the elongated fastener is an elongated fastener 1 according to any embodiment presented herein that is arranged to pass into the first blind hole 19 in the first construction part 18 of wood so that the rod 2 of the elongated fastener 1 is partly in the first blind hole 19 in the first construction part 18 of wood, so that the first proximal end 3 of the rod 2 of the elongated fastener 1 is outside the first blind hole 19 in the first construction part 18 of wood, and so that the screw member 6 of the elongated fastener 1 is screwed through a bottom 22 of the first blind hole 19 in the first construction part 18 of wood and into the first construction part 18 of wood.

It is apparent to a person skilled in the art that as technology advanced, the basic idea of the invention can be implemented in various ways. The invention and its embodiments are therefore not restricted to the above examples, but they may vary within the scope of the claims.

## Claims

1. An elongated fastener (1) for a glued-in-rod structure, wherein the elongated fastener (1) comprising
a rod (2) having a first proximal end (3) and a first distal end (4), a first outer thread (5), and a longitudinal central axis X-X,
**characterized**
**by** the elongated fastener (1) comprising a screw member (6) having a second proximal end (7) that is attached to the first distal end (4) of the rod (2),
by the screw member (6) having an external wood thread (8) extending from a second distal end (9) of the screw member (6) towards the second proximal end (7) of the screw member (6) and a longitudinal central axis Y-Y that is coaxial with the longitudinal central axis X-X of the rod (2)
by a second tubular sleeve member (11) coaxially surrounding the first distal end (4) of the rod (2), and
by the screw member (6) being attached to the rod (2) by means of the second tubular sleeve member (11).

2. The elongated fastener (1) according to claim 1, **characterized**
**by** a first tubular sleeve member (25) coaxially surrounding the rod (2) between the first proximal end (3) of the rod (2) and the first distal end (4) of the rod (2).

3. The elongated fastener (1) according to claim 1 or 2, **characterized**
**by** the second tubular sleeve member (11) coaxially surrounding additionally a second proximal end (7) of the screw member (6).

4. The elongated fastener (1) according to any of the claims 1 to 3, **characterized**
**by** the first outer thread (5) of the rod (2) extend from the first distal end (4) of the rod (2),
by the second tubular sleeve member (11) having a first inner thread (12) configured to engage the first outer thread (5) extending from the first distal end (4) of the rod (2), and
by the second tubular sleeve member (11) having a second inner thread (13) configured to engage a second outer thread (14) extending from the second proximal end (7) of the screw member (6).

5. The elongated fastener (1) according to claim 3, **characterized**
**by** the first outer thread (5) of the rod (2) extend from the first distal end (4) of the rod (2),
by the second tubular sleeve member (11) having a first inner thread (12) configured to engage the first outer thread (5) extending from the first distal end (4) of the rod (2), and
by the second proximal end (7) of the screw member (6) being attached to the second tubular sleeve member (11).

6. The elongated fastener (1) according to any of the claims 1 to 3, **characterized**
**by** a second blind hole (16) extending from the first distal end (4) of the rod (2) towards the first proximal end (3) of the rod (2), and
by the second blind hole (16) having a third inner thread (10) configured to engage a second outer thread (14) extending from the second proximal end (7) of the screw member (6).

7. The elongated fastener (1) according to any of the claims 1 to 6, **characterized**
**by** the first outer thread (5) of the rod (2) extend from one of the first proximal end (3) of the rod (2) and the first distal end (4) of the rod (2).

8. The elongated fastener (1) according to any of the claims 1 to 7, **characterized**
**by** the first outer thread (5) of the rod (2) extend to one of the first proximal end (3) of the rod (2) and the first distal end (4) of the rod (2).

9. The elongated fastener (1) according to any of the claims 1 to 6, **characterized**
**by** the first outer thread (5) of the rod (2) extend from the first proximal end (3) of the rod (2) to the first distal end (4) of the rod (2).

10. The elongated fastener (1) according to any of the claims 1 to 9, **characterized**
**by** the major diameter d1 of the screw member (6) being less than 50 % of the diameter of the rod (2), preferably less than 50 % of major diameter d2 of the first outer thread (5) of the rod (2).

11. The elongated fastener (1) according to any of the claims 1 to 10, **characterized**
**by** the screw member (6) being a separate part, which is attached to the rod (2).

12. The elongated fastener (1) according to any of the claims 1 to 11, **characterized**
**by** the screw member (6) being made of metal such as of steel.

13. The elongated fastener (1) according to any of the claims 1 to 12, **characterized**
**by** the rod (2) being made of metal such as of steel.

14. The elongated fastener (1) according to any of the claims 1 to 13, **characterized**
**by** the rod (2) having a cylindrical outer surface, and
by the cylindrical outer surface having elevations and/or depressions.

15. The elongated fastener (1) according to claim 14, **characterized**
**by** the elevations and/or depressions being at least partly formed by the first outer thread (5) of the rod (2).

16. A fastening method for fastening a second construction part (17) to a first construction part (18) of wood,
**characterized**
**by** a first providing step for providing the second construction part (17) with a hole (20),
by a drilling step for drilling a blind hole (19) in the first construction part (18) of wood,
an aligning step for aligning the hole (20) in the second construction part (17) and the blind hole (19) in the first construction part (18) of wood,
by a second providing step for providing hardenable adhesive material (21) in the blind hole (19) in the first construction part (18) of wood,
by a third providing step for providing an elongated fastener (1) according to any of the claims 1 to 15, and
by an arranging step for arranging the rod (2) of the elongated fastener (1) to pass through the hole (20) in the second construction part (17) and into the first blind hole (19) in the first construction part (18) of wood so that the rod (2) of the elongated fastener (1) is at least partly in the first blind hole (19) in the first construction part (18) of wood, so that the first proximal end (3) of the rod (2) of the elongated fastener (1) is outside the first blind hole (19) in the first construction part (18) of wood and outside the hole (20) in the second construction part (17), and so that the screw member (6) of the elongated fastener (1) is screwed through a bottom (22) of the first blind hole (19) in the first construction part (18) of wood and into the first construction part (18) of wood.

17. A fastening arrangement for fastening a second construction part (17) to a first construction part (18) of wood,
**characterized**
**by** the second construction part (17) being provided with a hole (20),
by a blind hole (19) in the first construction part (18) of wood,
by the hole (20) in the second construction part (17) and the blind hole (19) in the first construction part (18) of wood being aligned,
by hardenable adhesive material (21) being provided in the blind hole (19) in the first construction part (18) of wood,
by an elongated fastener (1) according to any of the claims 1 to 15 being arranged to pass through the hole (20) in the second construction part (17) and into the first blind hole (19) in the first construction part (18) of wood so that the rod (2) of the elongated fastener (1) is at least partly in the first blind hole (19) in the first construction part (18) of wood, so that the first proximal end (3) of the rod (2) of the elongated fastener (1) is outside the first blind hole (19) in the first construction part (18) of wood and outside the hole (20) in the second construction part (17), and so that the screw member (6) of the elongated fastener (1) is screwed through a bottom (22) of the first blind hole (19) in the first construction part (18) of wood and into the first construction part (18) of wood.

18. An installing method for installing an elongated fastener in a first construction part (18) of wood,
**characterized**
**by** a drilling step for drilling a blind hole (19) in the first construction part (18) of wood,
a second providing step for providing hardenable adhesive material (21) in the blind hole (19) in the first construction part (18) of wood,
a third providing step for providing the elongated fastener in the form of an elongated fastener (1) according to any of the claims 1 to 15,
an arranging step for arranging the rod (2) of the elongated fastener (1) into the first blind hole (19) in the first construction part (18) of wood so that the rod (2) of the elongated fastener (1) is partly in the first blind hole (19) in the first construction part (18) of wood, so that the first proximal end (3) of the rod (2) of the elongated fastener (1) is outside the first blind hole (19) in the first construction part (18) of wood, and so that the screw member (6) of the elongated fastener (1) is screwed through a bottom (22) of the first blind hole (19) in the first construction part (18) of wood and into the first construction part (18 of wood.

19. An installing arrangement for installing an elongated fastener in a first construction part (18) of wood,
**characterized**
**by** a blind hole (19) in the first construction part (18) of wood,
by hardenable adhesive material (21) being provided in the blind hole (19) in the first construction part (18) of wood,
by the elongated fastener being an elongated fastener (1) according to any of the claims 1 to 15 that is arranged to pass into the first blind hole (19) in the first construction part (18) of wood so that the rod (2) of the elongated fastener (1) is partly in the first blind hole (19) in the first construction part (18) of wood, so that the first proximal end (3) of the rod (2) of the elongated fastener (1) is outside the first blind hole (19) in the first construction part (18) of wood, and so that the screw member (6) of the elongated fastener (1) is screwed through a bottom (22) of the first blind hole (19) in the first construction part (18) of wood and into the first construction part (18) of wood.
